Europäisches Patentamt

(19) **European Patent Office**

**Office européen des brevets**

(11) Veröffentlichungsnummer: **0 211 300**
**B1**

(12) **EUROPÄISCHE PATENTSCHRIFT**

(45) Veröffentlichungstag der Patentschrift:
**10.01.90**

(51) Int. Cl.⁴: **H 02 M 3/335**

(21) Anmeldenummer: **86109946.3**

(22) Anmeldetag: **19.07.86**

(54) **Schaltnetzteil.**

(30) Priorität: **27.07.85 DE 3527000**

(43) Veröffentlichungstag der Anmeldung:
**25.02.87 Patentblatt 87/9**

(45) Bekanntmachung des Hinweises auf die Patenterteilung:
**10.01.90 Patentblatt 90/2**

(84) Benannte Vertragsstaaten:
**BE CH DE FR GB IT LI**

(56) Entgegenhaltungen:
**EP-A- 0 144 754**
**DE-A- 2 845 163**
**DE-A- 3 131 272**

(73) Patentinhaber: **Deutsche Thomson-Brandt GmbH,**
**Hermann-Schwer-Strasse 3 Postfach 1307,**
**D-7730 Villingen-Schwenningen (DE)**

(72) Erfinder: **Hartmann, Uwe, Ing. grad., Tallardstrasse 15,**
**D-7730 Villingen (DE)**
Erfinder: **Lopez, Daniel, Kopsbühl 68, D-7730 Villingen**
**(DE)**

(74) Vertreter: **Einsel, Robert, Dipl.-Ing., Deutsche**
**Thomson-Brandt GmbH Patent- und Lizenzabteilung**
**Göttinger Chaussee 76, D-3000 Hannover 91 (DE)**

## Beschreibung

Bei Geräten der Nachrichtentechnik wie z.B. einem Fernsehempfänger ist es bekannt, die für die einzelnen Stufen notwendigen Betriebsspannungen mit einem Schaltnetzteil aus der Netzspannung zu erzeugen. Ein Schaltnetzteil ermöglicht die für den Anschluß äußerer Geräte und für die Maßnahmen zur Schutzisolierung vorteilhafte galvanische Trennung der Empfängerschaltung vom Netz. Da ein Schaltnetzteil mit einer gegenüber der Netzfrequenz hohen Frequenz arbeitet, kann der zur galvanischen Trennung dienende Trenntransformator gegenüber einem Netztransformator für 50 Hz wesentlich kleiner und leichter ausgebildet sein. Durch mehrere Wicklungen oder Wicklungsabgriffe und angeschlossene Gleichrichter können auf der Sekundärseite des Schaltnetzteiltransformators Betriebsspannungen unterschiedlicher Größe und Polarität erzeugt werden.

Um bei Auftreten eines Defektes innerhalb eines Gerätes, welches durch ein Schaltnetzteil mit Betriebsspannung versorgt wird, eine Überlastung des Schalttransistors zu vermeiden, ist es erforderlich, den Schalttransistor durch eine spezielle Schaltung zu schützen.

Aus der europäischen Anmeldeschrift EP-A-144 754 ist ein Sperrwandler-Schaltnetzteil bekannt, welches mit einem zusätzlichen Oszillator versehen ist, der als Schutzschaltung für den Schalttransistor dient. Bei Auftreten eines durch einen Fehlerindikator erkannten Betriebsfehlers wird der Oszillator aktiviert, wodurch das Schaltnetzteil mit verminderter Verlustleistung betrieben wird.

Ferner ist aus der Offenlegungsschrift DE-A-2 845 163 eine Spannungs-Stabilisierungsschaltung für ein Stromversorgungsgerät bekannt, bei welchem der Schalttransistor von einem im Primärkreis des Transformators angeordneten Oszillator gesteuert wird. Eine Überspannungs- und/oder Überstrommeldeschaltung bewirkt bei Auftreten eines Betriebsfehlers eine Unterbrechung der Oszillatorschwingungen.

Es sind mit der Zeilenfrequenz synchronisierte Schaltnetzteile bekannt, bei denen der Schalttransistor von einer sekundärseitig angeordneten integrierten Schaltung (TEA 2029) über eine galvanische Trennung lastabhängig durch Impulsbreitenmodulation gesteuert wird. Ein derartiges Schaltnetzteil ist in der Anmeldung DE-P 3 436 555.9 beschrieben. Die integrierte Schaltung ist mit einer Schutzschaltung versehen, die bei Überlast kurzzeitig die Ansteuerung des Schalttransistors unterbricht und nach einer Erholzeit wieder aufnimmt, indem der Impulsbreitenmodulator zunächst mit Impulsen kleiner Breite beginnt und dadurch ein weiches Einschalten bewirkt. Eine derartige Schutzschaltung ist zweckmäßig bei kurzzeitigen Überlastungen, wie sie z.B. bei Überschlägen innerhalb einer Bildröhre besonders nach einem Transport durch aufgewirbelte Partikel auftreten können, da nach einer Erholzeit die Störung beseitigt ist.

Für die Einhaltung von Sicherheitsvorschriften, insbesondere zur Vermeidung von Brandfolgeschäden muß dagegen bei Vorliegen eines dauernden Überlastfalles, wie bei Kurzschluß einer Versorgungsschiene dafür gesorgt werden, daß das Gerät ausgeschaltet wird.

Dies kann bei der bekannten Schutzschaltung z.B. durch Zählen der Abschaltvorgänge erfolgen und nach einer vorgegebenen Anzahl von Schaltvorgängen wird der Impulsbreitenmodulator abgeschaltet, wodurch der Schalttransistor und somit das Schaltnetzteil ohne Funktion ist.

Damit sind im Prinzip die Sicherheitsvorschriften erfüllt, allerdings ist eine derartige Lösung unbefriedigend, da auch bei mehrmaligen Überschlägen in der Bildröhre eine Dauerabschaltung erfolgen würde.

In Schaltungskonzepten, bei denen die Vor- bzw. Treiberstufen für den Schalttransistor direkt aus dem Schaltnetzteil ihre Betriebsspannung erhalten, ergibt sich ein weiterer Nachteil: Ist in einer beliebigen Versorgungsschiene eine Dauerstörung enthalten, werden Vor- und Treiberstufen nur unzureichend mit Spannung versorgt, wodurch der Schalttransistor ungenügend angesteuert und leistungsmäßig unzulässig betrieben werden kann. Daraus resultierend ist es möglich, daß die Schutzschaltschwelle zum Abschalten des Impulsbreitenmodulators nicht erreicht wird, so daß als Folge eine Zerstörung des Schalttransistors auftritt.

Es ist Aufgabe der Erfindung, ein Schaltnetzteil mit Schutzschaltung aufzuzeigen, welches zwischen kurzzeitigen und dauernden Überlastungsfehlern unterscheiden kann und bei dauernden Überlastungsfehlern eine Abschaltung der Versorgungsspannungen bewirkt.

Diese Aufgabe wird gemäß der Erfindung durch die im Anspruch 1 aufgeführten Merkmale gelöst. Weiterbildungen der Erfindungen sind in den Unteransprüchen gekennzeichnet.

Im Prinzip wird als Erkennungskriterium für das Vorliegen einer Kurzzeit- oder Dauerstörung der Spannungsanstieg einer beliebigen vom Schaltnetzteil erzeugten Versorgungsspannung direkt nach dem Einschalten herangezogen.

Liegt kein Störungsfall vor, steigen die Spannungen nach einem bekannten Verlauf auf einen bestimmten Spannungswert an. Ist allerdings eine Dauerüberlast z.B. bei Kurzschluß eines Bauteiles in einer Schiene vorhanden, steigt die Spannung langsamer als im Normalfall an und erreicht unter Umständen auch nicht ihren Sollwert. Dies ist z.B. dadurch möglich, daß durch die Impulsbreitenbegrenzung der Impulsmodulator keine höheren Schalttransistorströme zuläßt, oder auch dadurch, daß eine Regelbegrenzung im Schaltnetzteil wirksam wird. Eine beliebige Versorgungsspannung kann also bei Vorliegen eines Dauerstörfalles für eine Dauerabschaltung des Schaltnetzteiles herangezogen werden.

Die Auswertung kann in einer einfachen Vergleichsschaltung zweier Zeitkonstanten erfolgen oder durch Zeitmessung des Anstiegsverhaltens einer Spannung an einem Kondensator, der durch eine Stromquelle gespeist wird. Es ist möglich, dafür Zählschaltungen einzusetzen, die einen Abschaltvorgang in Form einer Unterbrechung der Steuerung des Schalttransistors bewirken.

Im folgenden soll anhand der Figuren beispielhaft eine Schutzschaltung für Dauerabschaltung des Schaltnetzteiles aufgezeigt werden. Es zeigen:

Fig. 1 ein auszugsweises Schaltbild eines durch TEA 2029 impulsbreitengesteuerten Schaltnetzteiles mit primärseitig angeordneter Schutzschaltung zur Auslösung einer Dauerabschaltung

Fig. 2 ein auszugsweises Schaltbild eines durch TEA 2029 impulsbreitengesteuerten Schaltnetzteiles mit sekundärseitig angeordneter Schutzschaltung zur Auslösung einer Dauerabschaltung.

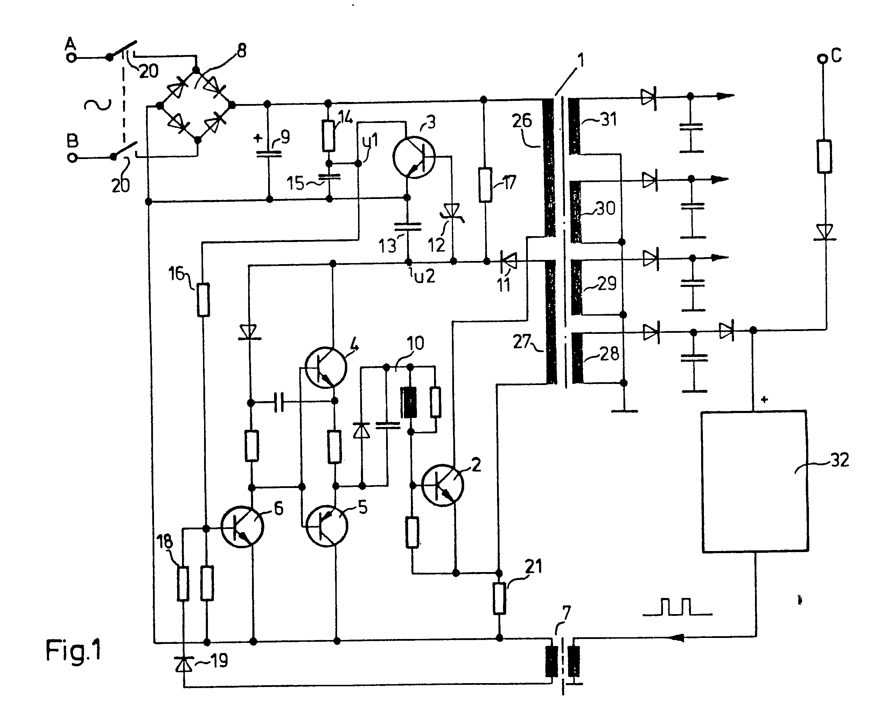

Zu Fig. 1: In der integrierten Schaltung 32 (TEA 2029) werden Steuerimpulse erzeugt, die über einen der galvanischen Trennung dienenden Trenntransformator 7, Trenndiode 19 und Widerstand 18 der Basis eines Vortransistors 6 zugeführt werden. Der Kollektor des Vortransistors 6 ist mit den Basisanschlüssen zweier in Gegentakt geschalteter Treibertransistoren 4 und 5 verbunden, die über eine Ankopplungsschaltung 10 den Schalttransistor 2 an seiner Basis mit den vom TEA 2029 erzeugten Impulsen periodisch leitend — nichtleitend steuern. Der Schalttransistor 2 ist an seinem Kollektor mit der Arbeitswicklung 26 des Transformators 1 und am Emitter mit dem Widerstand 21, an dem eine Spannung abgenommen werden kann, die proportional zum Strom im Schalttransistor 2 ist, verbunden. Die Reihenschaltung von Transistor 2, Arbeitswicklung 26 und Widerstand 21 liegt parallel zu der am Ladekondensator 9 stehenden Gleichspannung, die im Gleichrichter 8 aus der an den Klemmen A und B stehenden Netzwechselspannung erzeugt worden ist.

Durch den Schaltvorgang im Schalttransistor 2 wird im Transformator 1 eine Wechselspannung induziert, die an den Wicklungen 27 - 31 für die Versorgung der einzelnen Baugruppen zur Verfügung steht. Aus der Wicklung 27 wird mit Diode 11 und Ladekondensator 13 eine Gleichspannung U2 erzeugt, die der Versorgung der Transistoren 4,5 und 6 dient. Während der Anlaufphase nach dem Einschalten mittels Schalter 20 wird die Versorgungsspannung U2 für die Transistoren 4 - 6 über Widerstand 17 von Ladekondensator 9 geliefert. Ist das Netzteil eingeschwungen, d.h. hat Schalttransistor 2 seine volle Funktion aufgenommen, wird diese Versorgungsspannung mit höherem Spannungswert und zugleich kleinerem Innenwiderstand aus der Wicklung 27 durch Gleichrichtung mittels Diode 11 in Verbindung mit Ladekondensator 13 übernommen. Der zeitliche Verlauf dieses Spannungsanstiegs sowie sein absoluter Wert dienen als Kriterium für die Wirkung einer im Dauerstörungsfall ausgelösten Dauerabschaltung, die durch Transistor 3 bewirkt wird.

Die Wirkungsweise ist folgende: Beim Einschalten durch Schalter 20 steigt die Spannung U1 am Kollektor von Transistor 3 entsprechend der gewählten Zeitkonstante des RC-Gliedes mit Widerstand 14 und Kondensator 15 an. Wenn Transistor 3 gesperrt bleibt, z.B. weil infolge eines Kurzschlusses im Gerät die Spannung U2 an Kondensator 13 nur langsam ansteigt und die durch die Zenerdiode 12 vorgegebene Schwellspannung zeitlich erst relativ spät erreicht werden kann, steigt die Spannung U1 weiter an. Transistor 6, dessen Basis mit U1 über Widerstand 16 verbunden ist, wird durchgeschaltet, so daß die aus der integrierten Schaltung 32 gelieferten Steuerimpulse nicht mehr wirksam werden. Dadurch bleibt Schalttransistor 2 und somit das Schaltnetzteil ohne Funktion.

Ist dagegen das Gerät ohne Fehler, d.h. die Spannung U2 steigt schnell genug auf ihre Sollgröße an, wird Transistor 3 schneller durchgeschaltet als die Spannung U1 an seinem Kollektor ansteigen kann. Dadurch kann Transistor 6 die Impulse aus der integrierten Schaltung 32 weiterleiten und das Schaltnetzteil bleibt in Funktion.

Bei Schaltnetzteilen mit einem Hilfsoszillator für den Anlauf, der während des Einschaltvorganges die Steuerung des Schalttransistors 2 übernimmt, könnte eine Schutzschaltung z.B. auch auf den Hilfsoszillator einwirken und dadurch eine Dauerabschaltung bewirken.

Die Spannungsversorgung für die integrierte Schaltung TEA 2029 kann während der Einschaltphase z.B. vom Anschluß C aus der am Ladekondensator 9 stehenden Spannung abgeleitet werden. Im eingeschalteten Zustand kann dann die Wicklung 28 die Versorgung der integrierten Schaltung übernehmen.

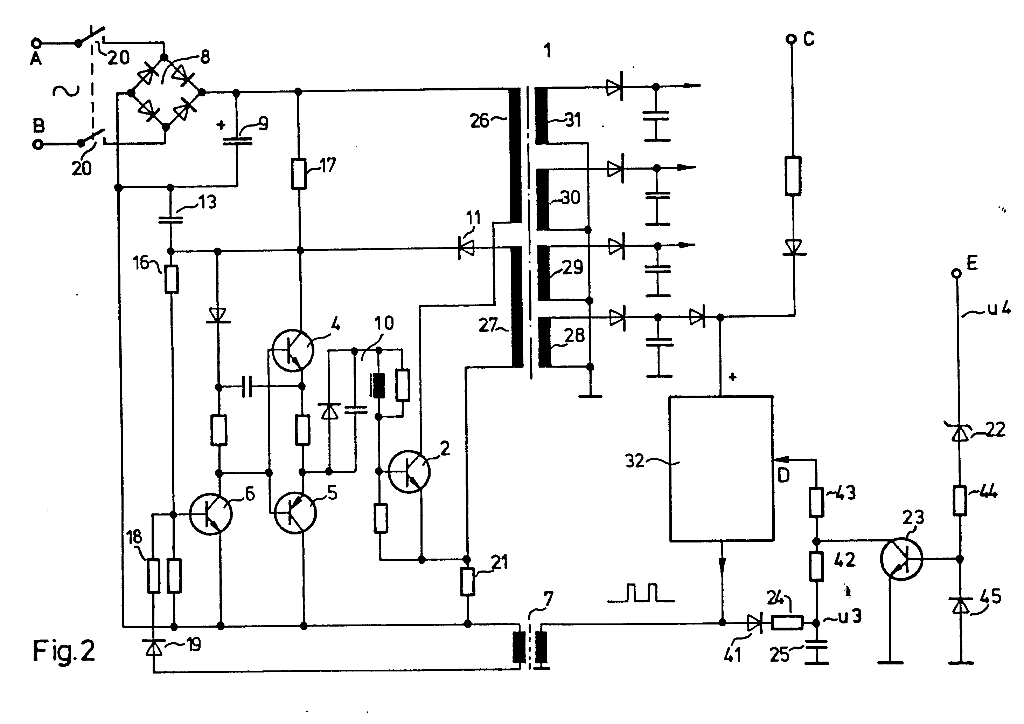

Zu Fig. 2: Sie zeigt ein mit Fig. 1 mit Ausnahme der Schutzschaltung nahezu identisches Schaltnetzteil. Die Schutzschaltung mit Transistor 23 und den zugehörigen Bauelementen ist auf die Sekundärseite des Schaltnetzteiles verlagert worden. Sie dient in dieser Anordnung dazu, die Abgabe von Impulsen aus der integrierten Schaltung 32, TEA 2029, für die Ansteuerung des Schalttransistors 2 zu unterbinden.

Die integrierte Schaltung 32 ist mit einer internen Schutzschaltung versehen, durch die bei Anliegen einer positiven Spannung von mehr als 1,26 V am Schutzeingang D der Schaltung ein Abschalten des internen Impulsgenerators bewirkt wird. Außerdem ist ein Zähler integriert, der die Anzahl kurzzeitiger Abschaltungen z.B. bei Bildröhrenüberschlägen registriert und nach dreimaligem Ansprechen den Impulsgenerator abschaltet. Ein Zurücksetzen des Zählers und damit die Möglichkeit zu drei neuen Startversuchen kann nur durch Trennung des Gerätes von der Netzspannung erreicht werden. Beschrieben ist der Wirkungsmechanismus und die Art der Ansteuerung am Schutzeingang D für die Schutzschaltung bei kurzzeitigen Störungen in der bereits erwähnten Patentanmeldung DE-P 3 436 555.9.

Für eine Dauerabschaltung z.B. bei Kurzschluß einer Versorgungsschiene ist an den Eingang D über Widerstand 43 eine zweite Steuerschaltung angeschlossen. Die Wirkungsweise ist folgende:

Vom Ausgang der integrierten Schaltung 32 wird aus den Impulsen durch Gleichrichtung in Diode 41 eine Gleichspannung abgeleitet, die über Widerstand 24 auf den Ladekondensator 25 gelangt. Diese positive Spannung ist über Widerstand 42 und 43 an den Eingang D gelegt und bewirkt bei Überschreiten von 1,26 V ein Abschalten des Impulsgebers. Somit ist das Schaltnetzteil ohne Funktion. Sinkt durch Entladung die Spannung am Kondensator 25 unter 1,26 V, kann der Impulsgeber seine Funktion kurzzeitig wieder aufnehmen, bis wiederum 1,26 V am Eingang D aufgebaut sind, wodurch ein erneutes Abschalten ausgelöst wird. Da die erforderlichen Impulse zum Aufbau der 1,26 V-Spannung nur relativ kurz anstehen, ist in der Praxis das Schaltnetzteil ohne Funktion.

Liegt dagegen kein Fehler im Gerät vor, wird Transistor 23 durchgeschaltet. Er schließt mit seiner Kollektor-Emitter-Strecke die an Kondensator 25 sich aufbauende Spannung nach Masse kurz, so daß an Schutzeingang D der integrierten Schaltung TEA 2029 keine positive Spannung wirksam ist. Leitend gesteuert wird Transistor 23 an Anschluß E über eine beliebige vom Schaltnetzteil erzeugte Versorgungsspannung aus dem Gerät, vorzugsweise aus einer vom Zeilentransformator abgeleiteten Spannung. Durch Zenerdiode 22 wird eine Schwellspannung vorgegeben, die von der an Anschluß E stehenden Spannung überwunden werden muß, um den Transistor 3 durchschalten zu können. Vorzugsweise wird die an Anschluß E anstehende Spannung aus einer vom Zeilentransformator abgeleiteten Spannung geliefert. Widerstand 44 dient der Entkopplung und Diode 45 als Schutz für Transistor 23 bei falsch gepolter Spannung.

*Bezugszeichenliste*

| | |
|---|---|
| 1 | Transformator |
| 2 | Schalttransistor |
| 3 | Transistor |
| 4 }| Gegentakt- |
| 5 }| Treibertransistoren |
| 6 | Vortransistor |
| 7 | Trenntransformator |
| 8 | Gleichrichter |
| 9 | Ladekondensator |
| 10 | Ankopplungsschaltung |
| 11 | Gleichrichterdiode |
| 12 | Zenerdiode |
| 13 | Ladekondensator |
| 14 | Widerstand |
| 15 | Kondensator |
| 16 | Widerstand |
| 18 | Widerstand |
| 19 | Trenndiode |
| 20 | Schalter |
| 21 | Widerstand |
| 22 | Zenerdiode |
| 23 | Transistor |
| 24 | Widerstand |
| 25 | Kondensator |
| 26 | Arbeitswicklung von 1 |
| 27 | Wicklung |
| 28 | Wicklung |
| 29 | Wicklung |
| 30 | Wicklung |
| 31 | Wicklung |
| 32 | Integrierte Schaltung TEA 2029 |
| 41 | Gleichrichterdiode |
| 42 | Widerstand |
| 43 | Widerstand |
| 44 | Widerstand |
| 45 | Diode |

**Patentansprüche**

1. Schaltnetzteil, insbesondere für Fernsehempfänger, für die Erzeugung von Versorgungsspannungen, mit einem Transformator (1), einem von einem Impulsgenerator (32) periodisch leitend und nicht leitend gesteuerten Schalttransistor (2) und mit einer ersten Schutzschaltung, die im Überlastfall die Steuerung für den Schalttransistor (2) kurzzeitig unterbricht und nach einer Erholzeit wieder zuläßt, dadurch gekennzeichnet, daß eine weitere Schutzschaltung vorgesehen ist, in welcher nach dem Einschalten das Anstiegsverhalten einer beliebigen, vom Schaltnetzteil erzeugten Spannung (U2, U4) mit dem Anstiegsverhalten einer unabhängig vom Schaltnetzteil am Kondensator eines RC-Gliedes (15, 25) erzeugten Spannung (U1, U3) verglichen wird, und daß bei zeitlich verzögertem und/oder in der Spannung verringertem Anstieg der vom Schaltnetzteil erzeugten Spannung (U2, U4) die unabhängig vom Schaltnetzteil erzeugte Spannung (U1, U3) eine dauernde Sperrung der Schalttransistorsteuerung bewirkt.

2. Schaltnetzteil nach Anspruch 1, dadurch gekennzeichnet, daß der gesteuerte Schalter direkt von dem Anstiegsverhalten einer beliebigen im Schaltnetzteil erzeugten Spannung gesteuert wird.

3. Schaltnetzteil nach Anspruch 1 und Anspruch 2, dadurch gekennzeichnet, daß der gesteuerte Schalter von einem Zähler angesteuert wird, der das Anstiegsverhalten einer beliebigen vom Netzteil erzeugten Spannung auswertet.

4. Schaltnetzteil nach einem der Ansprüche 1 - 3, dadurch gekennzeichnet, daß der gesteuerte Schalter aus einem Transistor (3, 23) besteht, dessen C-E-Strecke parallel zum Kondensator (15, 25) des RC-Gliedes (14, 15, 24, 25) geschaltet ist.

5. Schaltnetzteil nach Anspruch 4, dadurch gekennzeichnet, daß in der Basisleitung von Transistor (3, 23) eine Zenerdiode (12, 22) für die Festlegung einer Schwellspannung angeordnet ist.

6. Schaltnetzteil nach einem der Ansprüche 1 - 5, dadurch gekennzeichnet, daß die weitere Schutzschaltung eine Sperrung im Verstärkungsweg für die Ansteuerimpulse von Schalttransistor 2 bewirkt.

7. Schaltnetzteil nach einem der Ansprüche 1 - 5, dadurch gekennzeichnet, daß die weitere Schutzschaltung auf einen Hilfsoszillator einwirkt, der für ein Anschwingen eines mit Hilfsoszillator ausgerüsteten Schaltnetzteiles erforderlich ist.

8. Schaltnetzteil nach einem der Ansprüche 1 - 5, dadurch gekennzeichnet, daß die weitere Schutzschaltung auf den Schutzeingang (D) einer die Steuerimpulse für den Schalttransistor (2) liefernden integrierten Schaltung (32) einwirkt.

**Claims**

1. A switched-mode power supply, particularly for television receivers, for the production of supply voltages, having a transformer (1), a switching transistor (2) controlled by a pulse generator (32) so as to be periodically conducting and non-conducting, and having a first protective circuit which, in the event of an overload, briefly interrupts the control for the switching transistor (2) and permits it again after a recovery time, characterised in that a further pro-

tective circuit is provided wherein, after switching on, the rise behaviour of any voltage (U2, U4) produced by the switched-mode power supply is compared with the rise behaviour of a voltage (U1, U3) produced, independently of the switched-mode power supply, at the capacitor of an RC network (15, 25), and that if the rise of the voltage (U2, U4) produced by the switched-mode power supply is delayed in time and/or reduced in voltage, the voltage (U1, U3) produced independently of the switched-mode power supply causes a continuous blocking of the switching-transistor control.

2. A switched-mode power supply according to Claim 1, characterised in that the controlled switch is controlled directly by the rise behaviour of any voltage produced in the switched-mode power supply.

3. A switched-mode power supply according to Claim 1 and Claim 2, characterised in that the controlled switch is actuated by a counter which evaluates the rise behaviour of any voltage produced by the power supply unit.

4. A switched-mode power supply according to any one of Claims 1 - 3, characterised in that the controlled switch consists of a transistor (3, 23), the C-E path of which is connected in parallel with the capacitor (15, 25) of the RC network (14, 15, 24, 25).

5. A switched-mode power supply according to Claim 4, characterised in that a Zener diode (12, 22) is provided in the base line of transistor (3, 23) to determine a threshold voltage.

6. A switched-mode power supply according to any one of Claims 1 - 5, characterised in that the further protective circuit causes a blockage in the amplification path for the actuating pulses of switching transistor 2.

7. A switched-mode power supply according to any one of Claims 1 - 5, characterised in that the further protective circuit acts on an auxiliary oscillator which is necessary for starting a switched-mode power supply equipped with an auxiliary oscillator.

8. A switched-mode power supply according to any one of Claims 1 - 5, characterised in that the further protective circuit acts on the protective input (D) of an integrated circuit (32) delivering the control pulses for the switching transistor (2).

**Revendications**

1. Bloc d'alimentation, notamment pour un récepteur de télévision, destiné à fournir des tensions d'alimentation, comprenant un transformateur (1), un transistor de commutation (2) mis périodiquement à l'état passant et à l'état bloqué par un générateur d'impulsions (32), et un premier circuit de protection qui interrompt temporairement la commande pour le transistor de commutation (2) en cas de surcharge et rétablit sa fonction après un temps de récupération, caractérisé en ce qu'on prévoit un deuxième circuit de protection servant, après la mise en circuit, à comparer la loi de croissance d'une tension quelconque (U2, U4) fournie par le bloc d'alimentation, à la loi de croissance d'une tension (U1, U3) indépendante du bloc d'alimentation, qui est délivrée au niveau du condensateur d'un circuit RC (15, 25) et que la tension (U1, U3) fournie indépendamment du bloc d'alimentation, provoque un blocage permanent de la commande du transistor de commutation lorsque la loi de croissance de la tension (U2, U4) fournie par le bloc d'alimentation est temporisée et/ou réduit.

2. Bloc d'alimentation selon la revendication 1, caractérisé en ce que le commutateur commandé est directement piloté par la loi de croissance d'une tension quelconque délivrée par le bloc d'alimentation.

3. Bloc d'alimentation selon les revendications 1 et 2, caractérisé en ce que le commutateur commandé est piloté par un compteur qui analyse la loi de croissance d'une tension quelconque fournie par le bloc d'alimentation.

4. Bloc d'alimentation selon l'une des revendications 1 à 3, caractérisé en ce que le commutateur commandé est formé par un transistor (3, 23) dont le circuit collecteur émetteur est parallèle au condensateur (15, 25) du circuit RC (14, 15, 24, 25).

5. Bloc d'alimentation selon la revendication 4, caractérisé en ce qu'une diode Zener (12, 22) servant à fixer une tension de seuil, est montée dans le circuit du transistor (3, 23).

6. Bloc d'alimentation selon l'une des revendications 1 à 5, caractérisé en ce que le deuxième circuit de protection induit le blocage des impulsions de commande du transistor de commutation 2 par voie d'amplification.

7. Bloc d'alimentation selon l'une des revendications 1 à 5, caractérisé en ce que le deuxième circuit de protection agit sur un oscillateur auxiliaire nécessaire pour la mise en oscillations d'un bloc d'alimentation muni d'un oscillateur auxiliaire.

8. Bloc d'alimentation selon l'une des revendications 1 à 5, caractérisé en ce que le deuxième circuit de protection agit sur l'entrée (D) d'un circuit intégré (32) délivrant les impulsions de commande pour le transistor de commutation (2).

Fig.1

Fig. 2

EP 0 211 300 B1